# EUROPEAN PATENT APPLICATION

(11) **EP 4 576 755 A1**
(43) Date of publication of application: **25.06.2025**
(21) Application number: 24212371.9
(22) Date of filing: 12.11.2024
(51) Int. Cl.: H04M 9/08

(54) **ECHO DETECTION DEVICE, ECHO DETECTOR, HOST DEVICE, AND NON-TRANSITORY COMPUTER READABLE MEDIUM**

(30) Priority: 22.12.2023 US 202318393804
(71) Applicant: INTEL Corporation, Santa Clara, CA 95054 (US)
(72) Inventor: KROVVIDI, Srinivas, 500090 Hyderabad (IN); R, Rahul, 683102 Aluva (IN); HEDGE, Mythili, Bangalore (IN); AGARWAL, Anshu, 560037 Bangalore (IN); GUPTA, Jay Vishnu, Bengaluru (IN); GUPTA, Sagar, Ghaziabad (IN); PATTANAIK, Vatsala, 560066 Bangalore (IN); KUMARAPPAN, Jayakumar, 560068 Bangalore (IN); JAGADISH, Arun, 560052 Bangalore (IN); HIREGOUDAR, Vijayakumar, 560100 Bangalore (IN); CHOUDHURY, Deepika, Bengaluru (IN); KAMADOLLI, Karunakar, Bangalore (IN); THAKUR, Jayprakash, 560035 Bangalore (IN)
(74) Representative: Viering, Jentschura & Partner mbB Patent- und Rechtsanwälte

(57) **Abstract**

An echo detection device is provided. The echo detection device may include a processor, configured to activate a transcription process that transcribes words generated from audio transmissions between a host device and at least one further device to text, analyze the text for identification of repeated character strings that are indicative of an echo, and, if an echo is detected, decode the audio transmission into a plurality of audio packets, form an echo-filtered audio stream by filtering out duplicate audio packets of the plurality of audio packets, and transmit the echo-filtered audio stream to the at least one further device and/or to an audio device of the host device is provided.

## Description

### Technical Field

This disclosure generally relates to an echo detection device, an echo detector, a host device, and a non-transitory computer readable medium.

### Background

Bluetooth usage for voice calls with headsets, car kits, earbuds etc., has become a necessity for day-to-day work and personal usage. Switching audio from loudspeaker to headset and vice versa is a generic use case.

A context and a desired and/or provided level of privacy may determine which audio device is selected.

With voice call audio, it is very important to provide a high-quality user experience without latency or data loss.

### Brief Description of the Drawings

In the drawings, like reference characters generally refer to the same parts throughout the different views. The drawings are not necessarily to scale, emphasis instead generally being placed upon illustrating the principles of the invention. In the following description, various aspects of the invention are described with reference to the following drawings, in which:
**FIG. 1** illustrates an exemplary schematic diagram of an echo detection device in accordance with various embodiments.
**FIG. 2** illustrates an exemplary schematic diagram of an echo detector in accordance with various embodiments.
**FIG. 3** shows an exemplary flow chart for operating an echo detector in accordance with various embodiments.
**FIG. 4** illustrates an exemplary schematic diagram of a host device in accordance with various embodiments.
**FIG. 5** illustrates an exemplary schematic diagram of a host device in accordance with various embodiments.
**FIG. 6** shows an exemplary lookup table of a host device in accordance with various embodiments.
**FIG. 7** shows an exemplary flow chart for operating a host device for adjusting output power in accordance with various embodiments.
**FIG. 8** illustrates an exemplary schematic diagram of a host device in accordance with various embodiments.
**FIG. 9** illustrates an exemplary schematic diagram of a host device in accordance with various embodiments.
**FIG. 10** illustrates an exemplary schematic diagram of a host device in accordance with various embodiments.
**FIG. 11** shows an exemplary table of a default parameters of a host device in accordance with various embodiments.
**FIG. 12** illustrates an operation of a host device in accordance with various embodiments; and
**FIG. 13** shows an exemplary flow chart for handling audio transmissions between a host device and at least one further device in accordance with various embodiments.

### Description

The following detailed description refers to the accompanying drawings that show, by way of illustration, specific details and examples in which the disclosure may be practiced. One or more examples are described in sufficient detail to enable those skilled in the art to practice the disclosure. Other examples may be utilized, and structural, logical, and electrical changes may be made without departing from the scope of the disclosure. The various examples described herein are not necessarily mutually exclusive, as some examples can be combined with one or more other examples to form new examples. Various examples are described in connection with methods and various examples are described in connection with devices. However, it may be understood that examples described in connection with methods may similarly apply to the devices, and vice versa. Throughout the drawings, it should be noted that like reference numbers are used to depict the same or similar elements, features, and structures.

When receiving an audio transmission, for example during a conference call, a remote user may experience annoying audio experiences when there is an echo created for various reasons.

In various embodiments, a transcript created during conference calls may be used to detect and eliminate an echo and may be used as a basis for techniques to provide a satisfying (e. g., free from echoes) user experience. An algorithm that may run on a host device (e. g., a PC that transmits the audio signal) or in a cloud may continuously monitor for redundant words and identify the possible source of the echo.

In other words, a method for echo detection and cancellation in audio signals (and transcript) during a video conferencing call, e. g., in Windows systems, is provided in various embodiments.

A user may experience an abrupt difference in volume levels when switching from one (e. g., Bluetooth-) headphone to another. This may lead to unpleasant, in particular sudden, audio level changes, and hence potential damage to ears.

In various embodiments, normalizing the volume settings of Bluetooth headphones may be achieved by creating a lookup table (LUT) of gain vs. power output during an initial connection process. To facilitate seamless transitions between headphone types, the power level of newly connected BT devices may be normalized based on previous (e. g., last) used values in the lookup table. A look up table may be created for different users, and the volume settings may be applied accordingly.

Thus, in various embodiments, a method for normalizing a volume level across different (Bluetooth-) headphones is provided for a seamless transition.

**Any** audio application that uses a microphone on a device and relies on real-time audio may suffer from audio dropouts when switching from a speaker (as an output device) to a (for example Bluetooth) headset during an active audio (e. g., voice) session.

Some of the applications are latency critical. The term "latency-critical applications" may refer to applications where even a small delay in audio transmission can have a negative impact on the user experience. Some examples of latency-critical applications using Bluetooth audio include Teams call, video conferencing, gaming, listening to music podcasts, navigation apps, voice assistants, audiobooks etc.

As an example, during a Teams call, if the wireless headset is newly connected, there will be a few (for example two to five) seconds of audio lost due to switching, and it may be possible that audio will not be available on any device. In this scenario, the voice call audio that is currently/initially being rendered on a first device (like, e. g., a speaker) may intentionally be switched to the (Bluetooth-) headset by the user.

During the switching scenario, setting up of an audio path may take a while, and there is possibility of missing at least some of the audio information, because it may not appear on the device (e. g., the Bluetooth-) headset) that the user has recently connected.

A similar problem may occur in some voice recording or GPS devices where audio is being received from a far end and rendered on a play back device.

The above described problem of voice samples being lost during audio device switching scenarios is the concern that may be improved. This can be a challenging problem to solve, as there are various factors that may contribute to voice sample loss during audio device switching. The factors may for example include latency, buffering, and hardware limitations. For example, if voice is transmitted as the audio signal, e. g., as part of a conversation, latency may be critical. Trying to recover old data will add latency, which is not tolerable. So, the user experience of losing the audio during an audio (e. g., Bluetooth) channel setup is considered as a compromise to avoid latency.

In various embodiments, a systematic approach to solve the problem of audio (e. g., voice) samples lost during an audio device switching in an active call is provided. Thereby, a lossless audio user experience is provided without compromising on latency.

In various embodiments, methods and devices for preventing audio loss during device switching in an active connection are provided.

In various embodiments, a method of rendering lost audio to the playback device without loss of audio or compromising latency is provided.

In various embodiments, an enhanced user experience for seamless device switching during an active audio connection without audio loss is provided.

A handshake between an audio digital signal processor (audio DSP) and a controller for wireless transmission of audio signals (e. g., a Bluetooth controller) is used. A framework is proposed in which, once a newly connected audio device is detected, the audio information (e. g., voice data) is recorded in the last few seconds when the new audio playback device is not yet available, and to render the recorded/stored audio signals using an enhanced sampling algorithm, wherein "enhanced" in this case refers to a lower sampling rate, such that an amount of audio signals represented by the sampled data is enhanced. The last recorded audio may be sent at an increased - e. g., double - rate speed to the (e. g., Bluetooth) audio playback device. Since the sampling rate is low, the recorded data will be catching up to the current instance of time. Thereby, lost audio is rendered to the audio playback device without loss of audio or compromising the latency.

**An** audio quality and rate may vary slightly for a few seconds during the playback of the recorded audio, but this should not have a huge impact on listening experience.

**.** Various embodiments avoid audio/voice samples loss in audio device switching.

Various embodiments enable an easy switching between different audio playback devices, e. g., between loudspeakers (also referred to as speakers) and headphones without losing any audio information. A smooth transition may be provided, since the audio may continue to play without any interruption or delay, which may be particularly important in latency critical applications.

Various embodiments solve the problem of sample loss during audio playback device switching. A comparable sample loss problem may occur in cases where there is an interval miss in scheduling (e. g, through network congestion, bandwidth congestions, interference, etc.), in that, due to some reason, if sufficient samples are not ready for a particular interval, there may be a loss of audio data for that interval, since it is real time audio. But the recovery mechanism of various embodiments, as outlined above and described in more detail below, may be applied to the few samples missed and may still be rendered, so the loss is recovered.

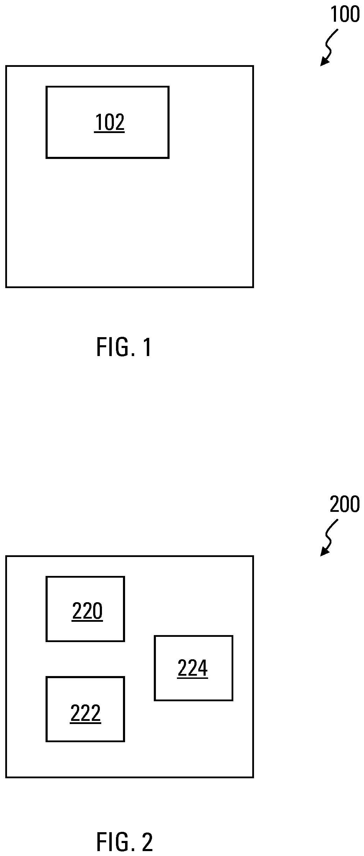

FIG. 1 illustrates an exemplary schematic diagram of an echo detection device 100 in accordance with various embodiments.

**An** echo herein is to be understood to refer to repeated sound/words that are created by a loudspeaker during a conference call. An echo may affect a quality of the call if it persists for a too long duration.

In a conference call scenario, it may be difficult to identify a source of the echo without manual user intervention. This may cause unnecessary delays and confusion among the users.

During a conference call, an echo may be caused in the following two scenarios:

**A** device of a participant that is located in the same conference room as a host device may have its loudspeaker activated. In this scenario, the audio playback through the loudspeakers of the participant's device will be captured by the microphone of the host device, which will get transmitted repeatedly to create the echo.

A remote participant uses a wireless (e. g., Bluetooth) device for the loudspeaker and uses a microphone of their playback device (for example, a PC, laptop, tablet or smartphone) for recording. Existing echo cancellation algorithms are restricted to work with a loudspeaker/microphone combination that is part of the same device. The playback through the wireless/Bluetooth loudspeaker will be captured by the microphone of the device, thereby causing an echo.

Activating a transcript of the audio session, e g., the conference call, may be used for echo detection, since the echo that is created will reflect in the transcript.

**As** an example, a transcript of a portion of a conference call may look as follows:
Person 1: "Yeah, yeah, yeah, yeah"
Person 2: "This is about an issue you want to solve, right?"
Person 1: "Get a, get a, get a, get a no"

Thus, from visual inspection, the repeated words ("Yeah" is repeated three times) and word combinations ("Get a" is also repeated three times) are easily identified.

In the following, echoes detected in the transcript are used to trigger actions that eliminate the echo in the audio playback (and the transcript).

The echo detection device 100 may include a processor 102.

The processor 102 may be a single digital processor 102 or may be made up of different, potentially distributed processor units. The processor 102 may be at least one digital processor 102 unit. The processor 102 may include one or more of a microprocessor, a microcontroller, a digital processor 102 (DSP), an application specific integrated circuit (ASIC), a field-programmable gate array (FPGA), discrete logic circuitry, or the like, appropriately programmed with software and/or computer code, or a combination of special purpose hardware and programmable circuitry. The processor 102 may further be configured to access programs, software, etc., which may be stored in a storage element of the echo detection device 100 or in an external storage element, e.g., in a computer network, such as a cloud.

The processor 102 may be configured to activate a transcription process that transcribes words generated from audio transmissions between a host device and at least one further device to text.

The host device may be a session host hosting an audio session, for example an audio call or a conference call, and the at least one further device may be the other participant(s) of the audio session.

The echo detection device 100 may be or be included in the host device or may be or be part of a different device, for example of a server to which the host device may be connected and to which the host device may deliver the transcript.

The transcription process that transcribes words to text may be executed as known in the art. For example, some audio session hosting software packages, like for example Microsoft Teams, are provided with a selectable functionality to provide a transcript.

The processor 102 may be configured to analyze the text generated by the transcription process for identification of repeated character strings that are indicative of an echo.

If a first character string (which is at least two characters long) is immediately followed by a second, identical, character string, this may be indicative of an echo.

A character string length that is typically echoed may depend on a processing delay caused by the (e. g. wireless) audio signal transmission and/or a size of a conference room in combination with a limited speed of sound, on how fast a person speaks, etc., but typically, the echo affects a word portion, an individual word, or a combination of a few words, rather than full sentences or the like.

A limit for a maximum number of characters in the string that may be analyzed by the processor may be set accordingly, for example to any natural number between, e. g., 2 and 10.

The processor 102 may further be configured to, if an echo is detected, decode the audio transmission into a plurality of audio packets.

Wireless communication that transmits audio data, the audio signal is typically provided in accordance with a corresponding wireless standard. These audio signals that have been modified to be wirelessly transmittable are referred to as audio packets.

The processor 102 may further be configured to form an echo-filtered audio stream by filtering out duplicate audio packets of the plurality of audio packets.

The filtering of the duplicate audio packets may in various embodiments essentially be performed like in a filtering of signals that are received in a microphone from a loudspeaker of the same device, in other words, as known in the art.

The duplicate audio packets may be removed, and the remaining audio packets may be provided as an echo-filtered audio stream.

The processor 102 may further be configured to transmit the echo-filtered audio stream to the at least one further device and/or to an audio device of the host device.

The processor 102 is further configured to transmit the unfiltered audio stream to the at least at least one further device and/or to an audio device of the host device if no echo is detected.

The processor 102 is further configured to obtain, if the echo is detected, information representing a physical location of each further device.

As explained above, two different scenarios may be likely for causing an echo, and in order to eliminate a cause of the echo, a physical location of the host device and each of the at least one further device(s), may be relevant.

The processor 102 is further configured to determine, based on the physical location of the host device and each further device, whether each of the further devices is in the same room as the host device or not.

The processor 102 may further be configured to obtain information representing an activation state of loudspeakers of each of the further devices that has been determined to be in the same room as the host device, and to mute a loudspeaker of each of the further devices that has activation state "on".

The processor 102 is further configured to obtain, if the echo is detected, information representing an activation state of microphones of each of the further devices that has been determined not to be in the same room as the host device, and to mute a microphone of each of the further devices that has activation state "on".

FIG. 2 illustrates an exemplary schematic diagram of an echo detector 200 in accordance with various embodiments. The echo detector 200 may provide a similar or identical functionality to the echo detector 100.

The echo detector 200 may include a transcription activator 220, for activating a transcription process that transcribes words generated from audio transmissions between the host device and the at least one further device to text, a text analyzer 222, for analyzing the text for identification of repeated character strings that are indicative of an echo, and an echo filter 224, for decoding the audio transmission into a plurality of audio packets; filtering out duplicate audio packets of the plurality of audio packets to generate an echo-filtered audio stream, and for transmitting the echo-filtered audio stream to the at least one further device and/or to an audio device of the host device.

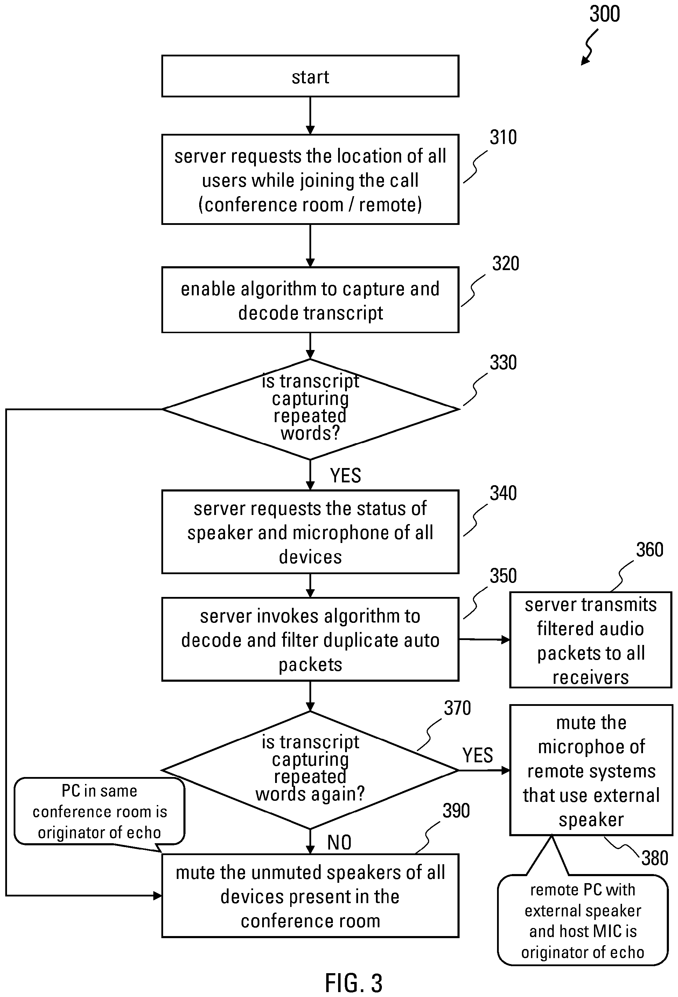

FIG. 3 shows an exemplary flow chart 300 for operating an echo detector device 100 and/or an echo detector 200 in accordance with various embodiments.

In various embodiments, a server (for example, the host device) may request the location of all users (conference room or remote location) while joining the conference call (310). A table may be created based on the input from each user.

In various embodiments, during the conference call, the server starts a transcript in the background (320). It will continuously monitor for redundant words / sentences to identify the echo.

Upon detection of redundant words/echo (330), the server will initiate the algorithm to filter out the redundant audio packets (350) and to stop transmitting repeated words / echo (i. e., the server transmits filtered audio packets to all receivers (360)).

In addition, the server will request the MIC and speaker configuration (mute or unmute) of each device participating in the call (340). All devices start polling the status of MIC and speakers.

Once the filtering out is applied (at 350 and 360), the server will monitor transcript again for repeated words (370). There won't be any redundant words if the originator of the echo is present in the same conference room.

If there is still an echo detected, based on the status information received at 310 and 340, the algorithm identifies all users in the conference room with unmuted speakers.

The users in the conference room with unmuted speakers will be notified to mute their speakers (or, respectively, the server mutes the PCs in accordance with their permissions) (390).

If redundant words are still detected after the filtering (at 350) and the transmitting of filtered audio packets (at 360), which indicates the initiator of the echo is a remote PC, the application will mute the microphone of the remote PC(s) that use(s) the external speaker (380).

In addition to echo cancellation, this algorithm may be modified/supplemented to clear the transcript/meeting note that is captured during the meeting.

In case of different Bluetooth audio devices being connected to a host device, separate digital-to-analog-converters (DACs) will be present on the host device side, as well as on the audio device (e. g., headphone) side.

The DACs in the different audio devices (e. g., headphones) may be tuned to different gain values based on a manufacturer preference. Due to this, a user will experience an abrupt difference in volume levels when switching from one audio device to another.

For example, a volume may be too low or too high based on the gain set by the manufacturer. Each time the user switches devices, the gain needs to be adjusted manually through the host. This will create an unpleasant experience for the user, especially during a conference call.

In various embodiments, methods and (host) devices for normalizing a volume level across multiple audio devices (e. g., Bluetooth audio devices) without user intervention are provided.

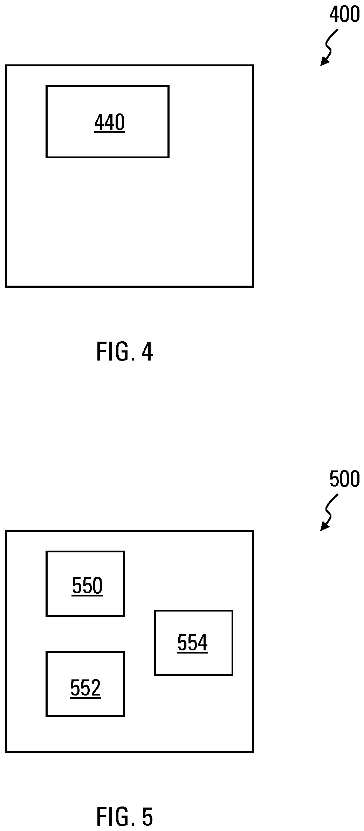

FIG. 4 illustrates an exemplary schematic diagram of a host device 400 in accordance with various embodiments.

The host device 400 may include a processor 440.

Basic properties of the processor 440 may be similar to those of the processor 102.

The processor 440 may be configured to store at least one lookup table including value pairs of gain versus output power for a plurality of audio devices.

A gain value, which may be adjusted by the user using a volume adjustment device, e. g. as a slide, a turnable knob, buttons, or the like) may determine an output power of the audio device (e. g., the headset), and a relation between the gain value and the power output may be device dependent.

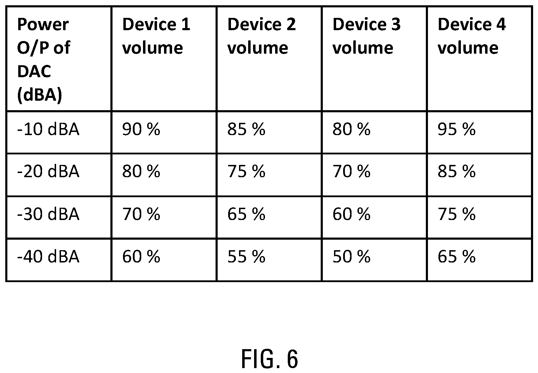

FIG. 6 shows an exemplary lookup table of a host device in accordance with various embodiments. Values for the volume (given in %) are representative of the gain and listed, for four different exemplary audio devices. The corresponding (output) power values are listed in the corresponding lines of the first column and provided in dBA.

The processor 440 may be configured to, upon switching from a first audio device operated by the host device to a second audio device to be operated by the host device, determine an output power value corresponding to the presently set gain value for the first audio device from the at least one lookup table.

The processor 440 may further be configured to determine the gain value of the second device corresponding to the determined output power value from the at least one lookup table.

Thus, in the above example, if the second audio device to be operated by the host device was Device 1, the resulting gain value of the second device would be 80 %.

The processor 440 may further be configured to set the gain value to the gain value determined for the second device.

Thus, in the above example, the gain value of the second audio device would be set to 80 % before activating the second device, and the volume as perceived by the user would be the same as for the first audio device.

The processor 440 may further be configured to populate, upon connecting a new audio device to the host device 400, the at least one lookup table with value pairs of gain versus output power for the new audio device.

To populate the lookup table with value pairs of gain versus output power for the new audio device, the processor 440 may be configured to set the gain to a sequence of different gain values, for example from minimum to maximum, and to receive, from a value indicator of the new audio device, an output power value.

The output power corresponding to the set volume level (gain) may be calculated using feedback received from the headphone. Essentially all headsets presently on the market support a volume indicator (VI) feedback mechanism to measure the power output for a particular gain.

In various embodiments, the output power numbers corresponding to each gain (volume level) may be communicated to the host device through BT sideband interface. Any reserved bit/register in BT protocol may be repurposed to communicate the volume indicator (VI) feedback to the host device 400.

In an exemplary embodiment, a user may use a Bluetooth headset with 60 % volume. Referring to the table in FIG. 6, Since this is a new device, the lookup table will populate the power level corresponding to this gain as -40 dBA, which may be a value that is delivered by the volume indicator. The host device 400 may store the gain and corresponding power until a new Bluetooth headset is connected. Optionally, further gain values may be set and further corresponding output power values be retrieved for populating the lookup table.

Whenever the user connects a different Bluetooth headphone, the host device 400 may check if the lookup table for the new audio device already exists in the database (the lookup table). If not, a test sequence will be played on the headphone and power level corresponds to each gain will be populated accordingly.

If an entry in the lookup table exists for the second device, the algorithm identifies the gain required to maintain the same power level set by the first device. If, in the above example, the second audio device is Device 3 in the table of FIG. 6, the gain requirement is only 30%. A volume level for the new Bluetooth device will be adjusted upfront to provide a seamless experience to the user without any abrupt volume levels.

The mediator algorithm can be off loaded to a vision processing unit like Intel GNA/VPU a central processing unit (CPU) of the host device 400, 500 itself may be utilized for the same purpose.

FIG. 5 illustrates an exemplary schematic diagram of a host device 500 in accordance with various embodiments.

The host device 500 may include a buffer 500, for storing at least one lookup table including value pairs of gain versus output power for a plurality of audio devices in the host device 500, an audio device controller 552, for indicating a switch from a first audio device operated by the host device 500 to a second audio device to be operated by the host device 500, and an output power controller 554, for determining an output power value corresponding to the presently set gain value for the first audio device from the at least one lookup table, for determining the gain value of the second device corresponding to the determined output power value from the at least one lookup table, and for setting the gain value to the gain value determined for the second device.

In various embodiments, multiple users may use same host device 400, 500. To identify the correct user, a user detection block may be introduced into the algorithm. For example, cameras that may be part of or connected to the host device, anyhow, may be used to identify the user during the training process and/or during a use of the host device 400, 500 in connection with the audio device. Separate LUTs may be created for different users.

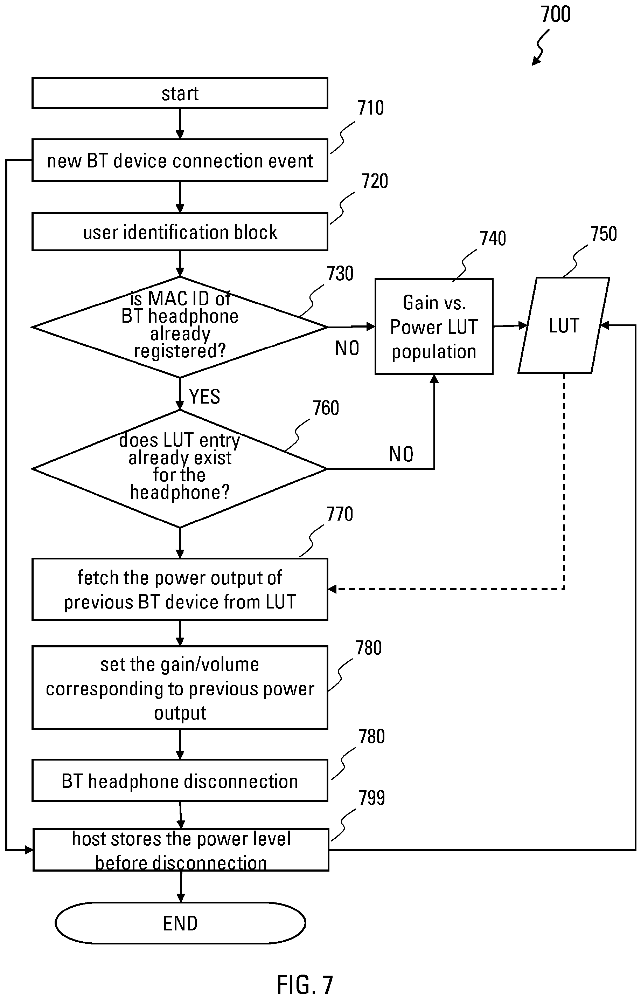

FIG. 7 shows an exemplary flow chart 700 for operating a host device for adjusting output power in accordance with various embodiments. The host device 400 and/or the host device 500 may be configured for executing the processes indicated in the flow chart 700.

In various embodiments, when using a host device 400, 500 for operating an audio device, a new Bluetooth device connection may be detected (710). Optionally, a user identification may be executed (720).

Subsequently, the lookup table may be consulted to determine whether the audio device (e. g., the headphone) is already registered (730) (a MAC ID of the audio device may for example be used for identification), and whether the lookup table is populated for the device (760).

If the audio device is not registered or the lookup table is not populated for the device, the lookup table will be populated with value pairs of gain versus output power (740) and stored in the lookup table (750).

Irrespective of whether the lookup table was freshly populated or the value entries existed before, the power output of previous Bluetooth device is retched from the lookup table (770).

Subsequently, the gain/volume for the new audio device corresponding to previous output power is set (780).

Upon a disconnection of the audio device (790), the host device may store the power level before disconnection (799).

A current state-of-the-art procedure for device switching during an active audio connection is described in the following:

During voice calls or data calls (like, for example, teams or zoom, etc.) a switching of the audio device from one output audio device to another is possible.

During the switching, an audio output that is rendered on speaker may be stopped, and the second audio device, for example a Bluetooth headset, may be selected as the output device when the connection is ready.

There is a short duration of channel setup to send data over the Bluetooth link, which happens when the audio switching happens, and during channel setup, the audio signal still cannot be sent over the Bluetooth link.

This means that around two seconds of audio loss may typically occur during the switching procedure.

This means that there is a requirement to improve a handling of the voice samples to avoid or mitigate lost audio samples during audio device switching, especially in latency critical applications.

In various embodiments, methods and devices are provided that enable lossless audio output during output device switching.

In various embodiments, a recording of audio (e. g., voice) data may be executed in the last few seconds when the audio playback device is not yet available, and the audio data may be rendered using an enhanced sampling algorithm, whereby a maintaining of latency may be achieved.

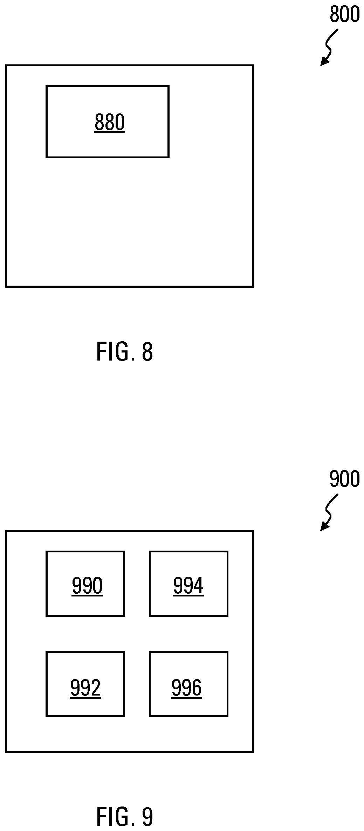

FIG. 8 illustrates an exemplary schematic diagram of a host device 800 in accordance with various embodiments.

The host device 800 may include a processor 880. Basic properties of the processor 880 may be similar to those of the processors 102 and/or 880.

The processor 880 may in various embodiments be configured to buffer an incoming audio stream in the host device 80, for example in a buffer that may be included in the host device 800.

The processor 880 may further be configured to switch from a first audio device connected to the host device 800 to a second audio device, for example from a loudspeaker to a headset, or from a first headset to a second headset.

The processor 880 may in various embodiments further be configured to sample the buffered audio stream at a first sampling rate to form a first sampled audio stream; and to sample a real-time incoming audio stream at a second sampling rate that is higher than the first sampling rate.

The processor 880 may further be configured to transmit the first sampled audio stream to the second audio device.

The sampling the buffered audio stream at a sampling rate that is lower than the sampling rate that is usually used may allow the transmitted audio data that have been generated from the stored data to be transmitted faster than the real-time audio data, and to eventually catch up with the real-time audio data. This will also be explained in more detail below in context with the other figures.

The processor 880 may in various embodiments further be configured to switch from transmitting the first sampled audio stream to transmitting the second sampled audio stream to the second audio device when the transmitted first sampled audio stream corresponds to the real-time incoming audio stream, in other words, when the stored audio stream has caught up with the real-time audio stream.

The buffering may in various embodiments only be initiated when required, for example upon receiving instructions to switch from the first audio device to the second audio device.

Alternatively, the buffering may for example be performed continuously (or, more precisely, continuously while an incoming audio stream is provided). In this case, the sampling of the first audio stream at the first sampling rate may only be performed when required, for example upon receiving instructions to switch from the first audio device to the second audio device.

The buffering may include storing, e. g., in a buffer, the audio stream as raw pulse-code modulation (PCM) samples.

A suitable ratio of the first sampling rate and the second sampling rate may for example be 0.5. In other words, the audio stream that is buffered may be sampled at half the sampling rat of the real-time audio stream. As an example, the first sampling rate (also referred to as sampling frequency) may for example be 16 K, and the second sampling rate may for example be 32 K.

More generally, the second sampling rate may be between about 1.33 and about 4 times the first sampling rate. The first sampling rate and the second sampling rate may be user-configurable parameters, or may be pre-defined, e. g. by a manufacturer.

The connection between the host device 800 and each of the first audio device and the second audio device, respectively, may in various embodiments be a synchronous audio connection, like for example a Bluetooth connection. In various embodiments, only the second audio device may be connected by the synchronous audio connection, and the first audio device may be connected by a different type of audio connection. For example, the first device may be integrated into the host device 800, or may be connected by a wire connection.

A synchronous audio connection may be configured to transmit audio packets of predefined size in predefined intervals. Thus, if the audio packets are generated from an audio stream that was sampled at a lower rate (e. g., half the usual sampling rate), more audio data (e. g., twice as many) than usual may be transmitted.

Transmitting the buffered audio stream faster than the real time audio stream would be transmitted may make it possible for the buffered audio stream to "catch up" with the real time audio stream. Thus, when the time stamp of the buffered audio stream coincides with real-time, which may happen a few seconds (e. g., between one and five seconds) of transmission of the buffered audio stream, the audio transmission may be switched from the buffered audio stream to the real-time audio stream that is sampled with the second sampling rate, which is the usual sampling rate.

Thereby, it may be achieved that all audio data may be transmitted (in other words, no audio data are lost), even though, when the buffered audio stream is transmitted, a quality of the audio transmission may be slightly degraded. Furthermore, after the short duration of transmitting the buffered audio stream, transmission of the real-time audio stream is restored, such that latency is avoided.

If the ratio of the first sampling rate and the second sampling rate is user-configurable, this may allow the user to determine based on their requirements to set their preference towards reaching the latency-free state sooner (the lower the sampling rate, the faster the completion of transmission of the buffered data and thereby the restoring of transmission of the real-time audio stream) or maintaining a higher quality of audio transmission, even when the buffered audio stream is transmitted (the closer the first sampling rate is to the second sampling rate, the better the audio quality).

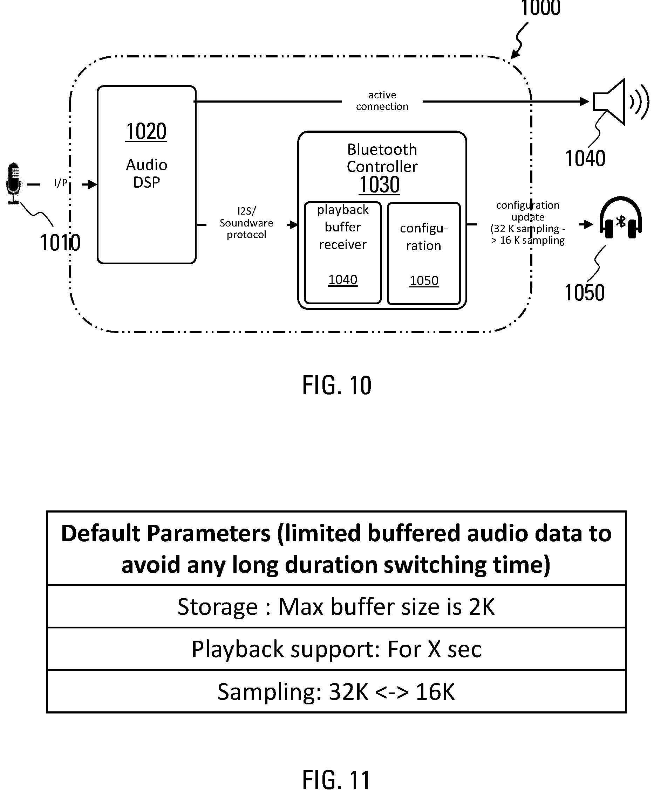

FIG. 11 lists parameters that may be either predefined, e. g. by a manufacturer of the host device 800, and/or may be configurable by a user.

FIG. 9 illustrates an exemplary schematic diagram of a host device 900 in accordance with various embodiments.

The host device 900 may include a buffer 990, for buffering (e. g., temporarily storing) an incoming audio stream in the host device 900.

The host device 900 may further include an audio device controller, for switching from a first audio device connected to the host device to a second audio device. Each of the connected audio devices may be connected via a wireless connection, for example a synchronous wireless connection, for example a Bluetooth connection.

The host device 900 may further include a sampling circuit, for sampling the buffered audio stream at a first sampling rate to form a first sampled audio stream, and for sampling a real-time incoming audio stream at a second sampling rate that is higher than the first sampling rate.

The sampling process itself may generally be performed as known in the art.

The host device 900 may further include a transmitter for transmitting the first sampled audio stream to the second audio device, and for switching from transmitting the first sampled audio stream to transmitting the second sampled audio stream to the second audio device when the transmitted first sampled audio stream corresponds to the real-time incoming audio stream, in other words, when a time stamp of the audio stream has reached real-time.

FIG. 10 illustrates an exemplary schematic diagram of a host device 1000 in accordance with various embodiments that switches an audio connection from a first audio device 1040 to a second audio device 1050.

Initially, a first audio device 1040, which may be connected to or integrated in the host device 1000, may be used for audio output. For example, the first audio device 1040 may be a built-in loudspeaker of a PC, a laptop, or a smartphone.

A user may initiate a switch to a second audio device 1050, for example a wireless headset that is to be connected to the host device 1000.

During the switching process, audio data, e. g., an incoming audio stream that is transmitted to the host device 1000 or received in the host device 1000 via a microphone 1010, may be recorded/buffered, for example during the last few seconds when the second audio device 1050 that is to be used for audio playback is not yet available. An audio module 1020, e. g. an audio digital signal processor (Audio DSP), may receive the incoming audio stream and, optionally, buffer the incoming audio stream.

Once an audio channel (e. g., a Bluetooth channel) is set up between the host device 1000 and the second audio device 1050, a Bluetooth controller 1030 that may be part of the host device 1000 may indicate to the audio module 1020 to deliver the buffered/recorded audio stream over a channel (e. g., a connection) between the Bluetooth controller 1030 and the audio module 1020. This channel may for example be a SoundWire, Slimbus or I2S channel.

The audio module 1020 may provide the buffered/recorded audio stream over the channel along with the real time audio stream. The audio data channel should be able to handle both audio streams.

From that point in time and as long as a (portion of the) buffered audio stream is present in the Bluetooth controller 1030, the audio stream is rendered at lower quality (the first sampling rate) to allow the audio data to be transmitted at a faster (e. g., double) rate.

For example, the Bluetooth channel may be configured for 32 K sampling frequency. During the initial period after establishing the Bluetooth channel to the second audio device 1050, the data (i. e., the incoming audio stream that was buffered, thus the last recorded audio stream) will be sampled with, e. g., 16 K, and will be sent at increased speed (e. g., double rate speed) to the second audio device 1050, which may function as a Bluetooth playback device.

Since the sample rate is low, the buffered/recorded data will be catching up to a current instance of time. Once all the buffered audio data is transmitted, the sampling rate is switched back to the original sampling rate. In this example, it switches to a 32 K sampling. Thereby, audio data that was missed during real-time transmission may be rendered to the second audio device (the playback device) without loss of audio data or compromise in the latency.

The audio quality and rate may vary slightly for a few seconds during the playback of the buffered/recorded audio stream, but this should not have a huge impact on listening experience. The audio playback of the recorded audio may be faster, e. g., have for example twice the speed of the original audio, which allows to catch up to real time audio.

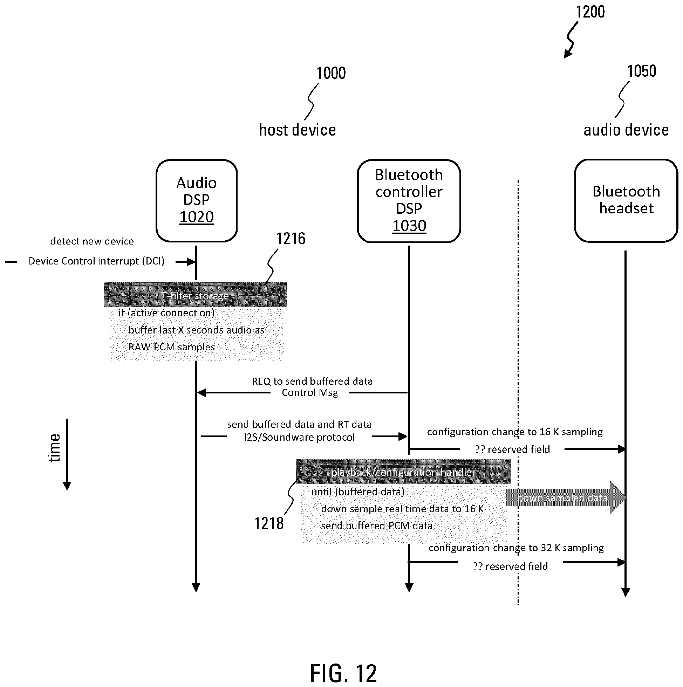

FIG. 12 illustrates, in a schematic diagram 1200, an operation of a host device 1000 in accordance with various embodiments.

As time proceeds (from top to bottom), various phases of processing and/or interaction are indicated for components of the host device 1000, in particular the audio module 1020 and the Bluetooth controller 1030, and the (second) audio device 1050, which may for example be a Bluetooth headset.

In the top left, a detection phase is indicated.

In this phase, the audio module 1020 ("Audio DSP") may detect the new device (the (second) audio device 1050) based on a device control interrupt (DCI) by a HLOS (high level OS).

The audio module 1020 may include a so-called "T-Filter Optimizer (for short: T-Filter)" 1216.

The T-Filter 1216 may include the buffer for buffering the incoming audio stream. A buffering/storage volume available in the T-filter 1216 may be required to be minimal, since it should not impact memory. For example, a buffer size of 2 KB should be sufficient for storing close to approximately one second of audio data (raw pern data. The configurable parameters of FIG. 11 may be relevant for a configuration of the T-Filter 1216.

The T-filter 1216 may be enabled to store the last few seconds of the incoming audio stream while delivering the data to the output audio device (e. g., the first audio device, before it is deactivated for switching to the second audio device 1050). The T-filter may for example be activated whenever an active audio connection exists. This storage may function like a backup copy of the audio stream that may be available for a feedback to the Bluetooth controller 1030 upon request.

When an active connection to an audio device 1050 exists, the T-Filter 1216 in the audio module 1020 may be operational to always store the last few seconds of an incoming audio stream as raw PCM samples.

This application may not be limited to an incoming audio stream for playback in an audio device 1050, but may rather be a generic implementation for many scalable use-cases around missed audio samples.

A subsequent phase may relate to rendering the switching timeframe audio.

This phase may handle a communication between the audio module 102 and the Bluetooth controller 1030, and enhancements that may be applied to the (buffered) audio stream to render the missed data.

A detailed description of how the Bluetooth controller 1030 gets the buffered/stored (also referred to as "history") audio stream from the T-filter 1216, and how the Bluetooth controller 1030 delivers the audio stream to the (second) audio device 1050 without audio loss is provided below.

Once the Bluetooth channel is set up and ready, the Bluetooth controller 1030 may request, from the audio module 1020 (the Audio DSP), the sending of any audio samples that had been missed before the channel was set up.

Contents of a history buffer that is part of the Bluetooth controller and used for audio data transmission to the (second) audio device 1050 (e. g., the headset) may now be required to deliver at a faster rate to achieve a state in which real time audio data is again delivered/broadcasted by the audio device 1050 without latency.

However, the history buffer cannot send the audio samples in a bulk to the audio device 1050, since the Bluetooth connection is a synchronous channel.

To achieve the task with fixed synchronous intervals and size of the packets, the Bluetooth controller 1030 may compromise on a quality of the audio samples by down sampling the rate.

In an example, as also indicated in FIG. 12, the usual sampling rate is supposed is supposed to be 32 K samples per second.

The buffered audio stream (the "history packets") may be under-sampled, for example by a factor two, such that the buffered audio stream is sampled at a (first) sampling rate of only 16 K samples per second.

The buffered audio stream that was sampled at the first sampling rate may subsequently be encoded.

This allows more real-time data (or rather: more of the buffered data that used to be real-time data) to fit into the given packet size.

The rendering/broadcasting of the down sampled audio stream from the buffer may occur at a higher e. g., double) speed as compared to the usual real-time speed.

While the buffered audio stream is broadcasted by the audio device 1050 at the increased speed, more audio data is added at the source. In other words, during the broadcast of the buffered audio stream, the real-time incoming audio stream may still be active.

Nevertheless, due to the increased speed, the buffered audio stream will at some point (e. g., after a few seconds) catch up with the real-time audio stream.

Once the history buffer is completed/emptied, e. g., a time stamp of the last transmitted audio package corresponds to real-time, the algorithm to down sample the audio stream may be stopped.

Thus, the original audio quality (without latency, or rather, with only the usual latency) is restored.

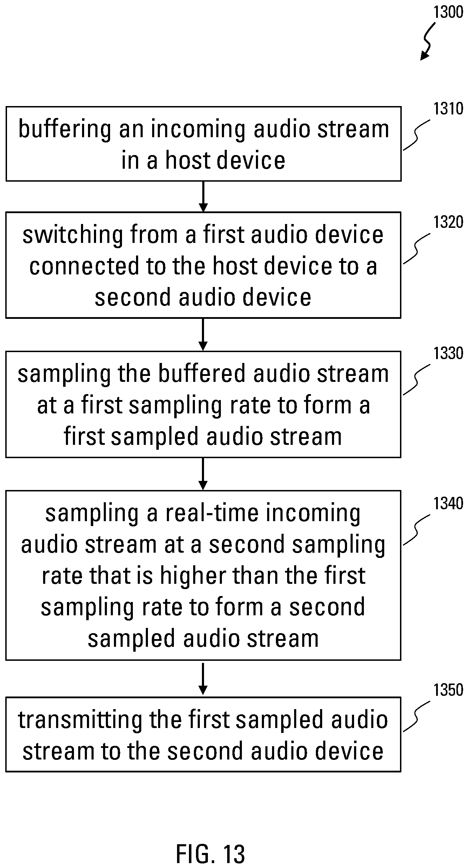

**FIG. 13** shows an exemplary flow chart 1300 for a method of handling audio transmissions between a host device and at least one further device in accordance with various embodiments.

The method, which may for example be executed by the processor 880, may include buffering an incoming audio stream in a host device (1310), switching from a first audio device connected to the host device to a second audio device (1320), sampling the buffered audio stream at a first sampling rate to form a first sampled audio stream (1330), sampling a real-time incoming audio stream at a second sampling rate that is higher than the first sampling rate to form a second sampled audio stream (1340), and transmitting the first sampled audio stream to the second audio device (1350).

The above audio devices may include wireless audio devices and may be configured for a short range mobile radio communication. The audio devices (and the corresponding host devices) may include a wireless interface such as e.g., a Bluetooth interface, e.g., a Bluetooth Low Energy (LE) interface, ZigBee, Z-Wave, Wi-Fi HaLow/IEEE 802.11ah, and the like. By way of example, one or more of the following Bluetooth interfaces may be provided: Bluetooth V 1.0A/1.0B interface, Bluetooth V 1.1 interface, Bluetooth V 1.2 interface, Bluetooth V 2.0 interface (optionally plus EDR (Enhanced Data Rate), Bluetooth V 2.1 interface (optionally plus EDR (Enhanced Data Rate), Bluetooth V 3.0 interface, Bluetooth V 4.0 interface, Bluetooth V 4.1 interface, Bluetooth V 4.2 interface, Bluetooth V 5.0 interface, Bluetooth V 5.1 interface, Bluetooth V 5.2 interface, and the like.

In general, a computer-readable medium may be a floppy disk, a hard disk, an USB (Universal Serial Bus) storage device, a RAM (Random Access Memory), a ROM (Read Only Memory), an EPROM (Erasable Programmable Read Only Memory) or a FLASH memory. A computer-readable medium may also be a data communication network, e.g., the Internet, which allows downloading a program code. The computer-readable medium may be a non-transitory or transitory medium.

### EXAMPLES

The examples set forth herein are illustrative and not exhaustive.

Example 1 is an echo detection device including a processor, configured to activate a transcription process that transcribes words generated from audio transmissions between a host device and at least one further device to text, analyze the text for identification of repeated character strings that are indicative of an echo, and, if an echo is detected, decode the audio transmission into a plurality of audio packets, filteri out duplicate audio packets of the plurality of audio packets to generate an echo-filtered audio stream, and transmit the echo-filtered audio stream to the at least one further device and/or to an audio device of the host device, and optionally a memory, on which text from the transcription process is stored.

In Example 2, the subject matter of Example 1 may optionally include that the processor is further configured to transmit the audio transmissions between the host device and the at least one further device without filtering, e. g., to transmit an unfiltered audio stream to the at least at least one further device and/or to an audio device of the host device if no echo is detected.

In Example 3, the subject matter of Example 1 or 2 may optionally include that repeated character strings that are indicative of an echo include a second character string of at least two characters that is immediately preceded by a first identical character string.

In Example 4, the subject matter of any one of Examples 1 to 3 may optionally include that character strings include an individual word, word portion, or word combination.

In Example 5, the subject matter of any of Examples 1 to 4 may optionally include that the processor is further configured to, if the echo is detected, obtain information representing a physical location of each further device (i. e., each of the at least one further device), to determine, based on the physical location of the host device and each further device, whether each of the further devices is in the same room as the host device or not, to obtain information representing an activation state of loudspeakers of each of the further devices that has been determined to be in the same room as the host device, and to mute a loudspeaker of each of the further devices that has activation state "on".

In Example 6, the subject matter of any of Examples 1 to 5 may optionally further include, if the echo is detected, obtaining information representing a physical location of each further device (i. e., each of the at least one further device), determining, based on the physical location of the host device and each further device, whether each of the further devices is in the same room as the host device or not, obtaining information representing an activation state of microphones of each of the further devices that has been determined not to be in the same room as the host device, and muting a microphone of each of the further devices that has activation state "on".

Example 7 is an echo detector. The echo detector may include a transcription activator, for activating a transcription process that transcribes words generated from audio transmissions between the host device and the at least one further device to text, a text analyzer, for analyzing the text for identification of repeated character strings that are indicative of an echo, and an echo filter, for decoding the audio transmission into a plurality of audio packets, filtering out duplicate audio packets of the plurality of audio packets to generate an echo-filtered audio stream, and transmitting the echo-filtered audio stream to the at least one further device and/or to an audio device of the host device.

Example 8 is a non-transitory computer-readable medium storing instructions that, when executed by a processor, cause a host device connected to at least one further device through a communication interface, to activate a transcript process that transcribes words generated from audio transmissions between the host device and the at least one further device to text, analyze the text for identification of repeated character strings that are indicative of an echo, if an echo is identified, decode the audio transmission into a plurality of audio packets, form an echo-filtered audio stream by filtering out duplicate audio packets of the plurality of audio packets, and transmit the echo-filtered audio stream to the at least one further device and/or to an audio device of the host device.

Example 9 is a host device. The host device may include a processor, configured to store at least one lookup table including value pairs of gain versus output power for a plurality of audio devices, upon switching from a first audio device operated by the host device to a second audio device to be operated by the host device, determine a presently set gain value (for example from system settings), determine an output power value corresponding to the presently set gain value for the first audio device from the at least one lookup table, determine the gain value of the second audio device corresponding to the determined output power value from the at least one lookup table, and set the gain value to the gain value determined for the second audio device, and optionally a memory, on which the at least one lookup table is stored.

In Example 10, the subject matter of Example 9 may optionally include that the processor is further configured to populate, upon connecting a new audio device to the host device, the at least one lookup table with value pairs of gain versus output power for the new audio device.

In Example 11, the subject matter of Example 10 may optionally include that, to populate the at least one lookup table with value pairs of gain versus output power for the new audio device, the processor is configured to set the gain to a sequence of different gain values and to receive, from a value indicator of the new audio device, an output power value.

In Example 12, the subject matter of Example 11 may optionally include that the output power value is received from the new audio device via Bluetooth sideband interface.

In Example 13, the subject matter of any of Examples 9 to 12 may optionally include that the at least one lookup table is user specific, the processor further being configured to identify a user of the second audio device before the determining the output power value corresponding to the presently set gain value for the first audio device.

Example 14 is a host device. The host device may include a buffer, for storing at least one lookup table including value pairs of gain versus output power for a plurality of audio devices in a host device, an audio device controller, for indicating a switch from a first audio device operated by the host device to a second audio device to be operated by the host device, and an output power controller for determining a presently set gain value, determining an output power value corresponding to the presently set gain value for the first audio device from the at least one lookup table, determining the gain value of the second device corresponding to the determined output power value from the at least one lookup table, and setting the gain value to the gain value determined for the second device.

Example 15 is a non-transitory computer-readable medium including instructions that, when executed by a processor, cause a host device connected to an audio device to store at least one lookup table including value pairs of gain versus output power for a plurality of audio devices in a host device, upon switching from a first audio device operated by the host device to a second audio device to be operated by the host device, determine a presently set gain value (for example from system settings), determine an output power value corresponding to the presently set gain value for the first audio device from the at least one lookup table, determine the gain value of the second device corresponding to the determined output power value from the at least one lookup table, and set the gain value to the gain value determined for the second device.

Example 16 is a host device. The host device may include a processor, configured to buffer an incoming audio stream in the host device to form a buffered audio stream, to switch from a first audio device connected to the host device to a second audio device, to sample the buffered audio stream at a first sampling rate to form a first sampled audio stream, to sample a real-time incoming audio stream at a second sampling rate that is higher than the first sampling rate to form a second sampled audio stream, and to transmit the first sampled audio stream to the second audio device.

In Example 17, the subject matter of Example 16 may optionally include that the processor is further configured to switch from transmitting the first sampled audio stream to transmitting the second sampled audio stream to the second audio device when a time stamp of the transmitted first sampled audio stream corresponds to real-time.

In Example 18, the subject matter of Example 16 or 17 may optionally include that the processor is further configured to initiate the buffering upon receiving instructions to switch from the first audio device to the second audio device.

In Example 19, the subject matter of Example 16 or 17 may optionally include that the buffering is performed continuously, e. g., continuously while the incoming audio stream is received.

In Example 20, the subject matter of any of Examples 16 to 19 may optionally include that the buffering includes storing the incoming audio stream as raw pulse-code modulation (PCM) samples.

In Example 21, the subject matter of any of Examples 16 to 20 may optionally include that the second sampling rate is between about 1.33 and about 4 times the first sampling rate.

In Example 22, the subject matter of any of Examples 16 to 21 may optionally include that the first sampling rate and the second sampling rate are user-configurable parameters.

In Example 23, the subject matter of any of Examples 16 to 22 may optionally include that the connection is a synchronous audio connection.

Example 24 is a host device. The host device may include a buffer, for buffering an incoming audio stream in the host device, an audio device controller, for switching from a first audio device connected to the host device to a second audio device, a sampling circuit, for sampling the buffered audio stream at a first sampling rate to form a first sampled audio stream, and for sampling a real-time incoming audio stream at a second sampling rate that is higher than the first sampling rate, and a transmitter for transmitting the first sampled audio stream to the second audio device, and switching from transmitting the first sampled audio stream to transmitting the second sampled audio stream to the second audio device when the transmitted first sampled audio stream corresponds to the real-time incoming audio stream, and optionally a memory, on which the buffered audio stream is stored.

Example 25 is a non-transitory computer-readable medium storing instructions that, when executed by a processor, cause a host device connected to an audio device to buffer an incoming audio stream in the host device, switch from a first audio device connected to the host device to a second audio device, sample the buffered audio stream at a first sampling rate to form a first sampled audio stream, sample a real-time incoming audio stream at a second sampling rate that is higher than the first sampling rate, transmit the first sampled audio stream to the second audio device, and switch from transmitting the first sampled audio stream to transmit the second sampled audio stream to the second audio device when the transmitted first sampled audio stream corresponds to the real-time incoming audio stream.

Example 26 is a method of handling audio transmissions between a host device and at least one further device, the method including activating a transcription process that transcribes words generated from audio transmissions between the host device and the at least one further device to text, analyzing the text for identification of repeated character strings that are indicative of an echo, and if an echo is detected, decoding the audio transmission into a plurality of audio packets, filtering out duplicate audio packets of the plurality of audio packets to generate an echo-filtered audio stream, and transmitting the echo-filtered audio stream to the at least one further device and/or to an audio device of the host device.

Example 27 is a method of handling audio transmissions between a host device and at least one further device, the method including storing at least one lookup table including value pairs of gain versus output power for a plurality of audio devices in a host device, indicating a switch from a first audio device operated by the host device to a second audio device to be operated by the host device, determining an output power value corresponding to the presently set gain value for the first audio device from the at least one lookup table, determining the gain value of the second device corresponding to the determined output power value from the at least one lookup table, and setting the gain value to the gain value determined for the second device.

Example 27 is a method of handling audio transmissions between a host device and at least one further device, the method including buffering an incoming audio stream in the host device, switching from a first audio device connected to the host device to a second audio device, sampling the buffered audio stream at a first sampling rate to form a first sampled audio stream, sampling a real-time incoming audio stream at a second sampling rate that is higher than the first sampling rate, transmitting the first sampled audio stream to the second audio device, and switching from transmitting the first sampled audio stream to transmitting the second sampled audio stream to the second audio device when the transmitted first sampled audio stream corresponds to the real-time incoming audio stream

The word "exemplary" is used herein to mean "serving as an example, instance, or illustration." Any example or design described herein as "exemplary" is not necessarily to be construed as preferred or advantageous over other examples or designs.

The words "plurality" and "multiple" in the description or the claims expressly refer to a quantity greater than one. The terms "group (of)", "set [of]", "collection (of)", "series (of)", "sequence (of)", "grouping (of)", etc., and the like in the description or in the claims refer to a quantity equal to or greater than one, i.e., one or more. Any term expressed in plural form that does not expressly state "plurality" or "multiple" likewise refers to a quantity equal to or greater than one.

The terms "processor" or "controller" as, for example, used herein may be understood as any kind of technological entity that allows handling of data. The data may be handled according to one or more specific functions that the processor or controller execute. Further, a processor or controller as used herein may be understood as any kind of circuit, e.g., any kind of analog or digital circuit. A processor or a controller may thus be or include an analog circuit, digital circuit, mixed-signal circuit, logic circuit, processor, microprocessor, Central Processing Unit (CPU), Graphics Processing Unit (GPU), Digital Signal Processor (DSP), Field Programmable Gate Array (FPGA), integrated circuit, Application Specific Integrated Circuit (ASIC), etc., or any combination thereof. Any other kind of implementation of the respective functions may also be understood as a processor, controller, or logic circuit. It is understood that any two (or more) of the processors, controllers, or logic circuits detailed herein may be realized as a single entity with equivalent functionality or the like, and conversely that any single processor, controller, or logic circuit detailed herein may be realized as two (or more) separate entities with equivalent functionality or the like.

The term "connected" can be understood in the sense of a (e.g., mechanical and/or electrical), e.g., direct or indirect, connection and/or interaction. For example, several elements can be connected together mechanically such that they are physically retained (e.g., a plug connected to a socket) and electrically such that they have an electrically conductive path (e.g., signal paths exist along a communicative chain).

While the above descriptions and connected figures may depict electronic device components as separate elements, skilled persons will appreciate the various possibilities to combine or integrate discrete elements into a single element. Such may include combining two or more components from a single component, mounting two or more components onto a common chassis to form an integrated component, executing discrete software components on a common processor core, etc. Conversely, skilled persons will recognize the possibility to separate a single element into two or more discrete elements, such as splitting a single component into two or more separate component, separating a chip or chassis into discrete elements originally provided thereon, separating a software component into two or more sections and executing each on a separate processor core, etc. Also, it is appreciated that particular implementations of hardware and/or software components are merely illustrative, and other combinations of hardware and/or software that perform the methods described herein are within the scope of the disclosure.

It is appreciated that implementations of methods detailed herein are exemplary in nature and are thus understood as capable of being implemented in a corresponding device. Likewise, it is appreciated that implementations of devices detailed herein are understood as capable of being implemented as a corresponding method. It is thus understood that a device corresponding to a method detailed herein may include one or more components configured to perform each aspect of the related method.

All acronyms defined in the above description additionally hold in all claims included herein.

While the disclosure has been particularly shown and described with reference to specific embodiments, it should be understood by those skilled in the art that various changes in form and detail may be made therein without departing from the spirit and scope of the disclosure as defined by the appended claims. The scope of the disclosure is thus indicated by the appended claims and all changes which come within the meaning and range of equivalency of the claims are therefore intended to be embraced.

## Claims

1. An echo detection device, comprising:
a processor, configured to:
activate a transcription process that transcribes words generated from audio transmissions between a host device and at least one further device to text;
analyze the text for identification of repeated character strings that are indicative of an echo; and
if an echo is detected:
decode the audio transmissions into a plurality of audio packets;
filter out duplicate audio packets of the plurality of audio packets to generate an echo-filtered audio stream; and
transmit the echo-filtered audio stream to the at least one further device and/or to an audio device of the host device.

2. The echo detection device of claim 1,
wherein the processor is further configured to transmit the audio transmissions between the host device and the at least one further device without filtering if no echo is detected.

3. The echo detection device of any one of claims 1 or 2,
wherein repeated character strings that are indicative of an echo comprise a second character string of at least two characters that is immediately preceded by a first identical character string.

4. The echo detection device of any one of claims 1 to 3,
wherein character strings comprise an individual word, word portion, or word combination.

5. The echo detection device of any one of claims 1 to 4, wherein the processor is further configured to, if the echo is detected:
obtain information representing a physical location of each further device;
determine, based on the physical location of the host device and each further device, whether each of the further devices is in the same room as the host device or not;
obtain information representing an activation state of loudspeakers of each of the further devices that has been determined to be in the same room as the host device; and
mute a loudspeaker of each of the further devices that has activation state "on".

6. The echo detection device of any one of claims 1 to 5, further comprising, if the echo is detected:
obtaining information representing a physical location of each further device;
determining, based on the physical location of the host device and each further device, whether each of the further devices is in the same room as the host device or not;
obtaining information representing an activation state of microphones of each of the further devices that has been determined not to be in the same room as the host device; and
muting a microphone of each of the further devices that has activation state "on".
